# EUROPEAN PATENT APPLICATION

(11) **EP 3 618 381 A1**
(43) Date of publication of application: **04.03.2020**
(21) Application number: 17922615.4
(22) Date of filing: 29.12.2017
(51) Int. Cl.: H04L 29/06

(54) **IDENTITY AUTHENTICATION**

(30) Priority: 24.08.2017 CN 201710737863
(71) Applicant: Beijing Sankuai Online Technology Co., Ltd, Beijing 100080 (CN)
(72) Inventor: ZHOU, Tianji, Beijing 100080 (CN)
(74) Representative: Kraus & Weisert Patentanwälte PartGmbB
(86) International application number: PCT/CN2017/119701
(87) International publication number: WO 2019/037373

(57) **Abstract**

The present application provides an identity authentication method and a terminal device. In an example, a client on a terminal device acquires a user identifier (ID) and a password to be authenticated in response to an identity authentication operation from a user; the client acquires an additional password according to the user ID; and the client sends an identity authentication request to a server, where the identity authentication request includes the user ID, the password, and the additional password, so that the server is capable of performing identity authentication in response to the identity authentication request based on a user ID, a password, and an additional password stored on the server.

## Description

### CROSS-REFERENCE TO RELATED APPLICATIONS

This patent application claims priority to Chinese Patent Applications No. 201710737863.0, entitled "IDENTITY AUTHENTICATION METHOD AND APPARATUS AND ELECTRONIC DEVICE" and filed on August 24, 2017, which is incorporated by reference in its entirety.

### TECHNICAL FIELD

The present application relates to identity authentication.

### BACKGROUND

To ensure the security of user information, when a user registers with a website or an application, the website or application requests the user to set a username and password and also requests the user to set a mobile number or an email address associated with the username and password for identity authentication or password recovery.

### SUMMARY

Embodiments of the present application provide an identity authentication method, to improve the security of an identity authentication method.

According to a first aspect, an embodiment of the present application provides an identity authentication method, including:
acquiring, by a client on a terminal device, a user identifier (ID) and a password to be authenticated in response to an identity authentication operation from a user; and
acquiring, by the client, an additional password according to the user ID; and
sending, by the client, an identity authentication request to a server, where the identity authentication request includes the user ID, the password, and the additional password, so that the server is capable of performing identity authentication in response to the identity authentication request based on a user ID, a password, and an additional password stored on the server.

According to a second aspect, an embodiment of the present application provides an identity authentication method, including:
acquiring, by a server, an additional password matching a user ID carried in a received user registration request according to the user registration request;
storing, by the server, the additional password and the user ID in association; and
performing, by the server, identity authentication according to a received identity authentication request, where the identity authentication request includes a user ID and a password to be authenticated, and an additional password that is stored on a client and is associated with the user ID.

According to a third aspect, an embodiment of the present application further provides a terminal device, including:
a processor and a machine-readable storage medium, where
the machine-readable storage medium stores machine executable instructions that is capable of being executed by the processor, and the machine executable instructions cause the processor to perform the following steps including:
acquiring a user ID and a password to be authenticated in response to an identity authentication operation from a user;
acquiring an additional password according to the user ID; and
sending an identity authentication request to a server, where the identity authentication request includes the user ID, the password, and the additional password, so that the server is capable of performing identity authentication in response to the identity authentication request based on a user ID, a password, and an additional password stored on the server.

In the identity authentication method disclosed in the embodiments of the present application, a client on a terminal device acquires a user ID and a password to be authenticated in response to an identity authentication operation from a user; the client acquires an additional password according to the user ID; and the client sends an identity authentication request to a server, where the identity authentication request includes the user ID, the password, and the additional password, so that the server is capable of performing identity authentication in response to the identity authentication request based on a user ID, a password, and an additional password stored on the server. By means of the authentication method disclosed in the embodiments of the present application, an additional password is used to perform identity authentication on a user, the security of identity authentication of the user is effectively improved, and leakage of user account information caused by the stolen registration password is effectively avoided. After a password of a user is stolen, a stealer performs identity authentication on another client. Because an additional password cannot be acquired, even if a username and a password are stolen, identity authentication cannot be completed, so that a stealer cannot successfully log in to a user account to acquire account information of the user.

### BRIEF DESCRIPTION OF THE DRAWINGS

To describe the technical solutions of the embodiments of the present disclosure or the prior art more clearly, the following briefly introduces the accompanying drawings required for describing the embodiments or the prior art. Apparently, the accompanying drawings in the following description show only some embodiments of the present disclosure, and a person of ordinary skill in the art may still derive other drawings from these accompanying drawings without creative efforts.
FIG. 1 is a flowchart of an identity authentication method according to an embodiment of the present application;
FIG. 2 is a flowchart of an identity authentication method according to an embodiment of the present application;
FIG. 3 is a flowchart of an identity authentication method according to an embodiment of the present application;
FIG. 4 is a flowchart of an identity authentication method according to an embodiment of the present application;
FIG. 5 is a flowchart of an identity authentication method according to an embodiment of the present application;
FIG. 6 is a flowchart of an identity authentication method according to an embodiment of the present application;
FIG. 7 is a schematic structural diagram of identity authentication logic according to an embodiment of the present application;
FIG. 8 is a schematic structural diagram of identity authentication logic according to an embodiment of the present application;
FIG. 9 is a schematic structural diagram of identity authentication logic according to an embodiment of the present application;
FIG. 10 is a schematic structural diagram of identity authentication logic according to an embodiment of the present application;
FIG. 11 is a schematic structural diagram of hardware of a terminal device according to an embodiment of the present application; and
FIG. 12 is a schematic structural diagram of hardware of a server according to an embodiment of the present application.

### DETAILED DESCRIPTION OF THE EMBODIMENTS

The following clearly and completely describes the technical solutions in the embodiments of the present application with reference to the accompanying drawings in the embodiments of the present application. Apparently, the described embodiments are merely some of the embodiments of the present application rather than all of the embodiments. All other embodiments obtained by a person of ordinary skill in the art based on the embodiments of the present application without creative efforts shall fall within the protection scope of the present application.

When a user logs in to a website or an application with which the user has registered, the user enters a registered username and password. If the username and password entered by the user match a username and password that are stored on a server end, identity authentication succeeds, and the user has logged in. The user can obtain user-related information and rights corresponding to the username.

A password has a limited length and therefore may be easily cracked, resulting in relatively low security of the above identity authentication manner. In addition, account information may be leaked. For example, a user often logs in to a website or an application on different terminal devices. If a malicious software on a terminal device has stolen a login password of the user and then logs in to an account of the user on another terminal device, the security of account information of the user is under threat.

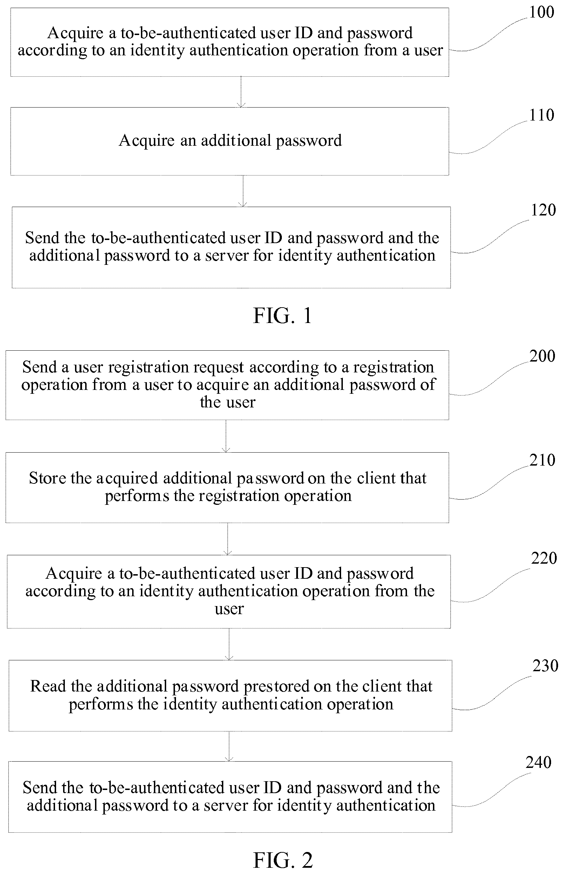

An embodiment of the present application discloses an identity authentication method. As shown in FIG. 1, the method includes step 100 to step 120.

Step 100: Acquire a to-be-authenticated user identifier (ID) and password according to an identity authentication operation from a user.

When the user logs in to a website or an application and needs to acquire user-related information, the user usually needs to enter a to-be-authenticated user ID and password via a user login portal that is set on a page of the website or a page of the application to perform identity authentication. The user is allowed to access personal information in a user account only after the identity authentication succeeds. During specific implementation, after the user enters the user ID and password and triggers an identity authentication button, an interface of the page of the website or the page of the application may be invoked to acquire the to-be-authenticated user ID and password entered by the user, and the to-be-authenticated user ID and password are sent to a server for identity authentication. During specific implementation, the user ID may be a username.

Step 110: Acquire an additional password.

If the user logs in to a client on a logged-in terminal device or a registered terminal device, the client usually stores the additional password. The additional password locally stored on the client may be directly read. That is, the additional password prestored on the client that performs the identity authentication operation is read.

If the user changes a terminal device or fails to properly keep the additional password stored on the terminal device, for example, deletes the additional password during data cleaning, the client may use an additional password generation portal that is set on an interface to initiate an additional password generation request to the server to acquire the additional password. Next, the additional password entered by the user into the client that performs the identity authentication operation is acquired.

For example, the user may first log in on a logged-in terminal device or a registered terminal device and then use a preset additional password acquisition portal on the client to initiate an additional password generation request to the server, so that the server sends the additional password matching the logged-in user to a logged-in client that initiates the request for display. The user then manually enters the additional password into a to-be-logged-in client.

Alternatively, in a case that the user enters at least the user ID into a to-be-logged-in client, for example, a client that does not store an additional password, through a preset additional password generation portal, for example, an additional password generation button, the to-be-logged-in client initiates an additional password generation request to the server to acquire the additional password. The server uses a registered information receiving manner matching the entered user ID to send the additional password matching the entered user ID. The user then manually enters the additional password in received information into the to-be-logged-in client.

During specific implementation, the additional password may be generated by the client or may be generated by a server end that performs identity authentication. The additional password is stored on both the client and the server end that performs the identity authentication.

Step 120: Send the to-be-authenticated user ID and password and the additional password to the server for identity authentication.

In an example, when acquiring the to-be-authenticated user ID, the to-be-authenticated password, and the additional password, the to-be-authenticated user ID, the to-be-authenticated password, and the additional password are further sent to the server, so that the server performs identity authentication on the user. During specific implementation, the to-be-authenticated user ID, the to-be-authenticated password, and the additional password may be sent to the server that performs identity authentication, and the server performs authentication on the to-be-authenticated password and the additional password separately based on the user ID and prestored user information. It is determined that the identity authentication of the user succeeds when both the to-be-authenticated password and the additional password are authenticated.

In another example, the additional password is used to encrypt the to-be-authenticated password, and an encrypted to-be-authenticated password and the to-be-authenticated user ID are then sent to the server that performs identity authentication. The server first acquires the prestored additional password matching the user ID, decrypts the encrypted to-be-authenticated password based on the prestored additional password matching the user ID, and authenticates a decrypted to-be-authenticated password. It is determined that the identity authentication of the user succeeds when the decrypted to-be-authenticated password is authenticated. If the additional password used in encryption is different from the prestored additional password that is acquired by the server and matches the user ID, even if the to-be-authenticated password entered by the user is a registration password, and the decrypted to-be-authenticated password is not the to-be-authenticated password entered by the user, authentication fails.

In the identity authentication method disclosed in this embodiment of the present application, a to-be-authenticated user ID and password are acquired according to an identity authentication operation from a user, a corresponding additional password is acquired, and the to-be-authenticated user ID and password and the additional password are then sent to a server for identity authentication. In the foregoing method, an additional password is combined to perform identity authentication on a user, the security of identity authentication of the user is effectively improved, and it is effectively avoided that the user account information is stolen when the password has been stolen. After a password of a user is stolen, a stealer performs identity authentication on another client. However, because an additional password cannot be acquired, even if a username and password are stolen, identity authentication cannot be completed, so that a stealer cannot successfully log in to a user account to acquire account information of the user.

Another embodiment of the present application discloses an identity authentication method. As shown in FIG. 2, the method includes step 200 to step 240.

Step 200: A client sends a user registration request in response to a registration operation from a user, to acquire an additional password of the user.

A user registration portal may be set on a page of a website or an application and is used for registration of a user, so that the user can use the website or application to manage personal information and can use more varied functions provided by the website or application. During registration, the user needs to enter a user ID and a registration password. The user ID is used as a unique ID of the user on the website or application for differentiating a user from other users. The registration password is used as identity authentication information of the user ID, so that a server may perform identity authentication on the user that logs in to the client. Generally, the user ID and the registration password are stored on a server end configured to perform identity authentication. When the user enters the user ID and the registration password and triggers a user registration button, an interface of the page of the website or the page of the application may be invoked to acquire the user ID and the registration password that are entered by the user, and the user registration request is generated. The user registration request is then sent to the server corresponding to the website or application for the registration of the user. The user registration request may include at least the user ID and the registration password. The user ID is usually a username.

The additional password may be generated by the client or the server during the registration of the user. Registration information is included in the user registration request, and includes at least the user ID. During specific implementation, the additional password may be generated by the client or may be generated by the server end, and are respectively stored on the client and the server end. Generating the additional password according to the registration information of the user includes: generating a random password matching the user ID according to the user ID and using the random password as the additional password; or, generating an additional password matching the user ID according to the user ID and a device ID of the client on which the registration operation occurs. For example, the additional password is generated by the server end, and generating the additional password includes at least the following two manners.

In the first manner, the server generates a random password matching the user ID according to the user ID included in the user registration request sent by the client, and uses the random password as the additional password. For example, the random password is generated according to the user ID by using a preset algorithm, for example, a function rand(), and is used as the additional password. After the server of the website or application receives the user registration request sent by the client, the server generates the matching additional password for the user according to the user ID in the user registration request, and locally stores a correspondence among the user ID, the registration password, and the additional password on the server.

In the second manner, the additional password matching the user ID is generated according to the user ID included in the user registration request sent by the client and the device ID of the client. For example, the additional password matching the user ID is generated according to the user ID and the device ID by using a preset algorithm, for example, the device ID is used as the additional password or the device ID and the user ID are used according to left-to-right bitwise XOR. A correspondence among the user ID, the registration password, and the additional password is locally stored on the server. The device ID may be a device Internet Protocol (IP) address, a device serial number or the like.

For a specific method of generating the additional password by the client, refer to a specific method of generating the additional password by the server end. Details are not described herein again. After generating the additional password, the client adds the user ID, the registration password, and the additional password to the user registration request or an additional password generation request, sends the user registration request or the additional password generation request to the server end for storage, and locally stores the additional password.

To facilitate authentication of the user when the user loses a password or performs an operation with a relatively high security level, an existing website or application usually also requests the user to preset an information (for example, an authentication code or an additional password) receiving manner to perform identity authentication on the user. The preset information receiving manner includes, but is not limited to, any one of the following: receiving information via an email, receiving information via an SMS message on a mobile phone, receiving information via a phone call, and receiving information via an instant messaging message.

Step 210: The client that performs the registration operation stores the acquired additional password.

After generating the additional password, the client adds the user ID, the registration password, and the additional password to the user registration request or the additional password generation request, and sends the user registration request or the additional password generation request to the server end for storage, and at the same time locally stores the additional password. After generating the additional password, the server end sends the generated additional password to the client in response to the user registration request for storage.

Step 220: The client acquires a to-be-authenticated user ID and password in response to an identity authentication operation from the user.

For a specific implementation of acquiring a to-be-authenticated user ID and password according to the identity authentication operation from the user, refer to the embodiment shown in FIG. 1. Details are not described herein again.

Step 230: The client reads the additional password prestored on the client that performs the identity authentication operation.

When the user logs in to the client on a registered terminal device, the user enters the to-be-authenticated user ID and password in a login portal of the client and then triggers a login button. The client reads the locally stored additional password, and generates an identity authentication request according to the to-be-authenticated user ID and password and the additional password, and sends the identity authentication request to the server, so that the server performs identity authentication.

During specific implementation, the prestored additional password is obtained in any of the following manners. The additional password is generated by the client or the server during the registration of the user. The additional password is downloaded from the server end after the user is authenticated via an authentication code. When the user logs in on a non-registered terminal device for the first time, the additional password is acquired by using a logged-in client or is received in an information receiving manner that is registered in advance.

Step 240: The client sends the to-be-authenticated user ID and password and the additional password to the server, so that the server performs identity authentication on the user.

Sending the to-be-authenticated user ID and password and the additional password to the server, so that the server performs identity authentication on the user includes: encrypting the to-be-authenticated password by using the additional password, and sending an encrypted to-be-authenticated password and the user ID to the server, so that the server performs identity authentication based on the encrypted to-be-authenticated password and the user ID; or, sending both the to-be-authenticated user ID and password and the additional password to the server, so that the server performs identity authentication based on the received to-be-authenticated user ID and password and the additional password.

During specific implementation, the client may use the following two manners to send a to-be-authenticated user ID and password PW₂ and an additional password PW₁ for identity authentication. In the first manner, the additional password PW₁ is used to encrypt the to-be-authenticated password PW₂ to obtain an encrypted to-be-authenticated password PW₃, and the encrypted to-be-authenticated password PW₃ and the user ID are sent to the server for identity authentication. In the second manner, the to-be-authenticated user ID and password PW₂ and the additional password PW₁ are sent to the server together for identity authentication.

Correspondingly, the server may perform identity authentication in two manners.

For example, if the server receives the encrypted to-be-authenticated password PW₃, the server first acquires, according to the user ID sent together with the encrypted to-be-authenticated password, a locally stored additional password PW₁' corresponding to the user ID, uses the additional password PW₁' to decrypt the received encrypted password PW₃ to acquire a decrypted to-be-authenticated password PW₂', and further compares the decrypted to-be-authenticated password PW₂' with a registration password PW that is locally stored on the server end and matches the user ID. If PW₂' and PW are consistent, identity authentication succeeds. If PW₂' and PW are not consistent, identity authentication fails.

During specific implementation, the server may store more than one additional password corresponding to the user ID. When decrypting the encrypted to-be-authenticated password, the server uses each additional password to decrypt the encrypted password to obtain decrypted to-be-authenticated passwords whose quantity is the same as the quantity of the additional passwords, and compares the decrypted to-be-authenticated passwords one by one with the registration password that is locally stored on the server end and matches the user ID. Identity authentication succeeds as long as one of the to-be-authenticated passwords is consistent with the registration password.

For another example, if the server receives the to-be-authenticated user ID and the password PW₂ and the additional password PW₁ that are sent together, the server first acquires, according to the user ID, the registration password PW and the additional password PW₁' that are locally stored and correspond to the user ID, compares the received additional password PW₁ with the locally stored additional password PW₁', and compares the received to-be-authenticated password PW₂ with the locally stored registration password PW. It is determined that identity authentication succeeds when PW₁ is the same as PW₁' and PW₂ is the same as PW. When PW₁ is different from PW₁' and/or PW₂ is different from PW, it is determined that identity authentication fails. Similarly, when the server end has a plurality of additional passwords that match the user ID, the received additional password needs to be compared one by one with the plurality of additional passwords that are stored on the server end and match the user ID. It is determined that the authentication of the additional password succeeds as long as one of the plurality of additional passwords is the same as the received additional password.

In the identity authentication method disclosed in this embodiment of the present application, a client prestores an additional password. When a user performs an identity verification operation, a to-be-authenticated user ID and password that are entered by the user are acquired, and the additional password locally stored on the client is read. The to-be-authenticated user ID and password and the additional password are then sent to a server for identity authentication. In this way, an additional password is used to perform identity authentication on a user, and the additional password is stored on a client, so that the security of identity authentication of a user is effectively improved, and it is effectively avoided that the user account information is stolen when the password has been stolen. After a password of a user is stolen, a stealer performs identity authentication on another client. Because an additional password cannot be acquired, even if a username and password are stolen, identity authentication cannot be completed, so that a stealer cannot successfully log in to a user account to acquire account information of the user.

In an example, the user may use the same username and password to register with a plurality of platforms or applications. However, if the username and password on one platform are stolen, a stealer may use the stolen username and password to log in to other applications, causing security risks to accounts of other applications. By means of the identity authentication method disclosed in the embodiments of the present application, a stealer cannot acquire an additional password stored on a client with an application and therefore cannot pass identity authentication. Even if a stealer steals an additional password stored on the client with the application, because the additional password is randomly generated by a server for the application and stored on the server for the application, a server for a different to-be-logged-in application cannot authenticate an additional password of other applications. Therefore, the stealer cannot pass identity authentication. The security of identity authentication is further improved.

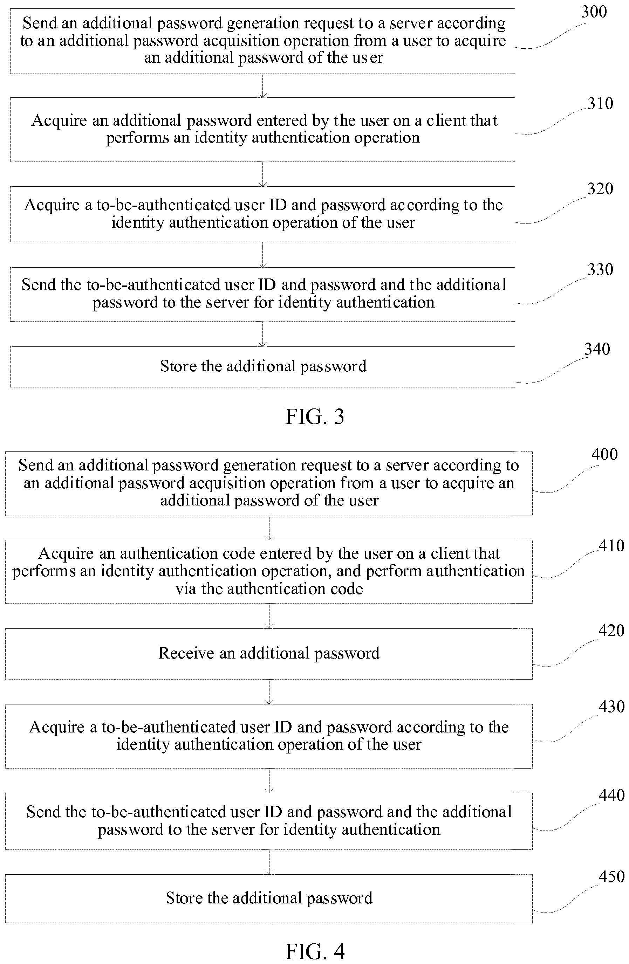

Another embodiment of the present application discloses an identity authentication method. As shown in FIG. 3, the method includes step 300 to step 340.

Step 300: Send an additional password generation request to a server in response to an additional password acquisition operation from a user, to acquire an additional password of the user.

During specific implementation, when the user logs in to an unregistered client or a registered client and a password stored on the registered client is damaged or lost, the user may use an additional password acquisition portal, for example, an additional password acquisition button that is set on an interface of a client to acquire the additional password from the server.

During specific implementation, the user enters at least a user ID into a to-be-logged-in client and triggers the additional password acquisition button. The client generates the additional password generation request after detecting the additional password acquisition operation from the user, and sends the additional password generation request to the server. The additional password generation request includes at least the user ID.

After receiving the additional password generation request sent by the to-be-logged-in client, the server determines that the user ID is currently in a logged-out state. The server then acquires registration information corresponding to the user ID, where the registration information includes a preset information receiving manner. The information receiving manner includes, but is not limited to, any one of the following: receiving information via an email, receiving information via an SMS message on a mobile phone, receiving information via a phone call, and receiving information via an instant messaging message. For example, the information receiving manner is receiving information via an email, and the registration information includes an email address for receiving information. The registration information corresponding to the user ID further includes a registration password and the additional password. Next, the server sends the additional password corresponding to the user ID to the user for the user ID in the form of an email by using a preset email address. During specific implementation, the server may re-generate an additional password according to the user ID, and then sends the user for the user ID in a preset form. For a method of re-generating an additional password according to the user ID by the server, refer to the second embodiment. Details are not described herein again.

When the user switches the client for login, in another implementation, the user first logs in to the client that stores the additional password. After successfully logging in, the user uses the additional password acquisition portal set on the interface of the client to perform an additional password acquisition operation. After detecting the additional password acquisition operation from the user, the client generates the additional password generation request, and sends the additional password generation request to the server to acquire the additional password. The additional password generation request includes at least the user ID. During specific implementation, to further improve the security of password authentication, one more time of login password authentication may be performed on the user when the user uses the additional password acquisition portal set on the interface of the client to perform the additional password acquisition operation.

After receiving the additional password generation request sent by the to-be-logged-in client, the server determines that the user ID is currently in a logged-in state. The server then acquires registration information corresponding to the user ID, where the registration information includes the additional password, and sends the additional password to the client that sends the additional password generation request. After receiving the additional password sent by the server, the client that sends the additional password generation request displays the additional password on the interface of the client to facilitate input into the to-be-logged-in client.

Step 310: Acquire an additional password entered by the user on a client that performs an identity authentication operation.

The additional password is acquired by a logged-in client or is acquired in a pre-registered information receiving manner corresponding to the user ID.

During specific implementation, the user acquires the additional password in the pre-registered information receiving manner, for example, receives the additional password by receiving an email, answering a phone call or receiving an SMS message, or by using the logged-in client. In this embodiment, for example, the user receives an email by using an email address in pre-registered receiving information to acquire the additional password, and the additional password carried in the email may be entered into the to-be-logged-in client.

During specific implementation, the additional password may be a character string or a two-dimensional code. When receiving a two-dimensional code recording the additional password, the client that performs the identity authentication operation scans the two-dimensional code to enter the additional password.

The to-be-logged-in client invokes a system interface to acquire an additional password obtained through scanning, or invokes a system interface to acquire an additional password entered in an additional password edit box.

Step 320: Acquire a to-be-authenticated user ID and password in response to the identity authentication operation from the user.

For a specific implementation of acquiring a to-be-authenticated user ID and password in response to the identity authentication operation from the user, refer to the first embodiment. Details are not described herein again.

Step 330: Send the to-be-authenticated user ID and password and the additional password to the server for identity authentication.

For a specific implementation of sending the to-be-authenticated user ID and password and the additional password to the server for identity authentication, refer to the second embodiment. Details are not described herein again.

Step 340: Store the additional password.

After the user switches the client and successfully logs in to the switched client, or, the user re-acquires an additional password and logs in successfully, the client locally stores the additional password. In this way, the additional password can be directly read during subsequent login.

In the identity authentication method disclosed in the embodiments of the present application, a logged-in client or a pre-registered information receiving manner is used to acquire an additional password, and identity authentication is performed with the additional password, and the to-be-authenticated user ID and password. The security of identity authentication is improved. In the identity authentication method disclosed in the embodiments of the present application, a trusted identity is used to acquire an additional password, so that when a password is lost or another device is used instead, a user can normally log in. In addition, for a law-breaker that has stolen a username and password, because the law-breaker does not have a trusted identity, that is, the law-breaker cannot receive the additional password, the law-breaker cannot obtain the additional password and cannot pass identity authentication, so that the security of identity authentication of a user is effectively improved, and it is effectively avoided that the user account information is stolen when the password has been stolen. After authentication succeeds, the client stores the additional password to facilitate login to this client a next time. In another aspect, the additional password may be transmitted in the form of a two-dimensional code, and a functional module for displaying and recognizing a two-dimensional code is set on the client, making it convenient for the user to rapidly and accurately enter an additional password, thereby further improving the efficiency of identity authentication.

Based on the embodiment shown in FIG. 3, another embodiment of the present application discloses an identity authentication method. As shown in FIG. 4, the method includes step 400 to step 450.

Step 400: Send an additional password generation request to a server in response to an additional password acquisition operation from a user, to acquire an additional password of the user.

During specific implementation, when the user logs in to another unregistered client or a registered client and a password stored on the registered client is damaged or lost, the user may use an additional password acquisition portal, for example, an additional password acquisition button that is set on an interface of a client to acquire the additional password from the server.

During specific implementation, the user needs to enter at least a user ID into a to-be-logged-in client and then trigger the additional password acquisition button. The client generates the additional password generation request in response to the additional password acquisition operation from the user, and sends the additional password generation request to the server. The additional password generation request includes at least the user ID.

After receiving the additional password generation request sent by the to-be-logged-in client, the server determines that the user ID is currently in a logged-out state. The server then acquires registration information corresponding to the user ID, where the registration information includes a preset information receiving manner. The information receiving manner includes, but is not limited to, any one of the following: receiving information via an email, receiving information via an SMS message on a mobile phone, receiving information via a phone call, and receiving information via an instant messaging message. For example, the information receiving manner is receiving information via an email, and the registration information includes an email address for receiving information. Next, the server sends an authentication code in the form of an email by using a preset email address to authenticate a to-be-logged-in user.

Step 410: Acquire an authentication code entered by the user on a client that performs an identity authentication operation, and perform authentication via the authentication code.

During specific implementation, the user acquires an authentication code in a pre-registered information receiving manner, for example, receives an email, answers a phone call or receives an SMS message to receive the authentication code sent by the server. In this embodiment, the user receives an email by using a pre-registered email address for receiving information. For example, an authentication code is received. The user enters the authentication code carried in the email to the to-be-logged-in client.

The user then triggers an authentication code authentication button set by the client to send the authentication code to the server to complete authentication via an authentication code.

For a specific solution of performing authentication on the client via an authentication code by a server end, refer to the prior art. Details are not described herein again.

Step 420: Receive an additional password.

After the server authenticates the client via the authentication code, the server sends the additional password corresponding to the user ID to the client that sends the additional password acquisition operation. After sending the authentication code, the client receives in real time the additional password sent by the server.

Step 430: Acquire a to-be-authenticated user ID and password according to the identity authentication operation from the user.

For a specific implementation of acquiring the to-be-authenticated user ID and password according to the identity authentication operation from the user, refer to the first embodiment. Details are not described herein again.

Step 440: Send the to-be-authenticated user ID and password and the additional password to the server for identity authentication.

For a specific implementation of sending the to-be-authenticated user ID and password and the additional password to the server for identity authentication, refer to the embodiment shown in FIG. 2. Details are not described herein again.

Step 450: Store the additional password.

After the user switches the client and successfully logs in to the switched client, or, after the user re-acquires an additional password and logs in successfully, the client locally stores the additional password. In this way, the additional password may be directly read during subsequent login.

In the identity authentication method disclosed in this embodiment of the present application, authentication is first performed via an authentication code, after authentication via an authentication code succeeds, an additional password is downloaded from a server, and then the identity authentication is performed with the additional password, and the to-be-authenticated user ID and password, thereby resolving the problem of relatively low security of an identity authentication method in the prior art. In the authentication method disclosed in the embodiments of the present application, authentication is first performed via an authentication code to determine an authentic identity of a user. An additional password is then generated for a to-be-logged-in client to complete identity authentication, so that if a password is lost or another device is used instead for login, the user can normally log in to the client. In addition, for a law-breaker that has stolen a username and password, because the law-breaker does not have a trusted identity, that is, the law-breaker cannot receive the additional password, the law-breaker cannot obtain the additional password and cannot pass identity authentication, so that the security of identity authentication of a user is effectively improved, and it is effectively avoided that the user account information is stolen when the password has been stolen. In addition, after the authentication via the authentication code succeeds, the client silently acquires the additional password from the server and locally stores the additional password, to facilitate login to this client a next time. In addition, a user no longer needs to manually enter an additional password, thereby further improving the efficiency and accuracy of identity authentication.

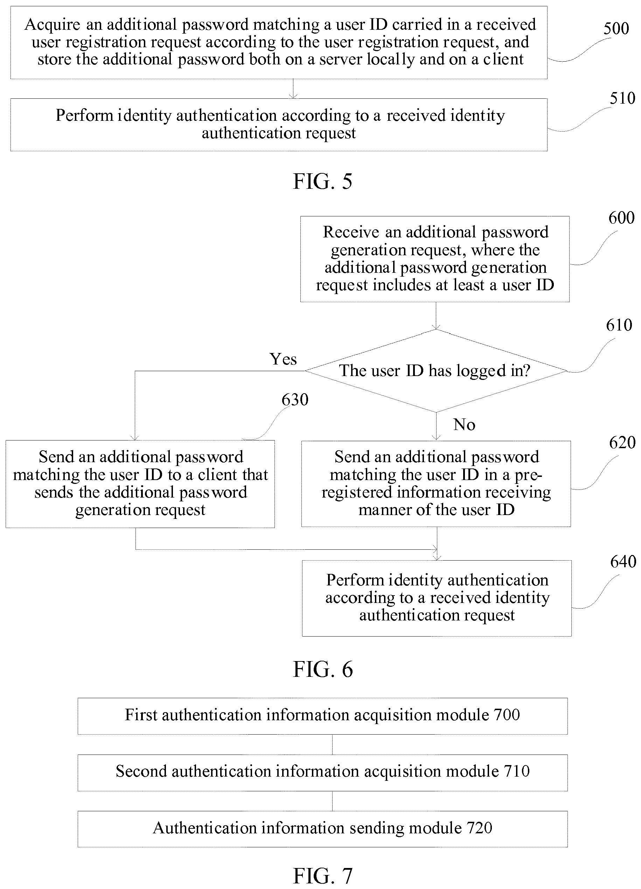

Another embodiment of the present application discloses an identity authentication method. As shown in FIG. 5, the method includes step 500 to step 510.

Step 500: Acquire an additional password matching a user ID carried in a received user registration request according to the user registration request, and store the additional password both on a server locally and on a client.

During specific implementation, the server receives in real time a request sent by the client, where the request includes, but is not limited to, the user registration request.

When a user uses the client to register, after the user enters a user ID and a registration password and triggers a registration button, the client sends the user registration request to the server. During specific implementation, the user registration request includes at least the user ID and the registration password. If the additional password is generated by the client, the user registration request further includes the additional password. If the additional password is generated by the server, the user registration request may further include a device ID of a terminal device on which the client is located. The device ID may be a device IP address, a device serial number or the like.

Next, acquiring, by the server, an additional password according to the received user registration request includes: generating a random password matching the user ID according to the user ID included in the received user registration request, and using the random password as the additional password; or, generating an additional password matching the user ID according to the user ID included in the received user registration request and the device ID of the client; or, acquiring the additional password carried in the user registration request.

For a method of acquiring, by the server, an additional password according to the user ID included in the user registration request, refer to the introduction of related steps in the embodiment shown in FIG. 2. Details are not described herein again. For a method of generating, by the server, the additional password according to the user ID included in the user registration request and the device ID of the client, refer to the introduction of related steps in the second embodiment. Details are not described herein again.

After acquiring the additional password, the server locally stores the additional password. During specific implementation, the server stores a matching relationship among the user ID, the registration password, and the additional password. The server sends the additional password to the client in response to the user registration request, making it easy for the client to store the additional password.

Step 510: Perform identity authentication according to a received identity authentication request.

The identity authentication request includes a to-be-authenticated user ID and password and the additional password.

Performing identity authentication on a current user of the client according to the identity authentication request sent by the client includes: acquiring, according to the user ID in the identity authentication request, the additional password and the registration password that are stored on the server and match the user ID, where the additional password and the registration password are used to decrypt an encrypted to-be-authenticated password in the identity authentication request, and matching a decrypted to-be-authenticated password against the registration password, to perform identity authentication; or, acquiring, according to the user ID in the identity authentication request, the additional password and the registration password that are stored on the server and match the user ID, where the additional password and the registration password that are stored on the server and match the user ID are respectively matched against the additional password and the to-be-authenticated password that are included in the identity authentication request to perform identity authentication.

During specific implementation, as shown in the embodiment in FIG. 2, the client may use two forms to send the to-be-authenticated password and the additional password for identity authentication. Correspondingly, the server performs identity authentication in two manners. For a specific implementation of performing identity authentication on a current user of the client by the server according to the identity authentication request sent by the client, refer to the specific description related to identity authentication in the second embodiment. Details are not described herein again.

In the identity authentication method disclosed in the embodiments of the present application, a user registration request sent by a client is received, an additional password is acquired according to the user registration request, and the additional password is then stored on a server locally and on the client. When the client sends an identity authentication request, identity authentication is performed on a current user of the client based on a to-be-authenticated user ID and password and the additional password that are included in the identity authentication request sent by the client, thereby resolving the problem of relatively low security in an identity authentication method in the prior art. In the authentication method disclosed in the embodiments of the present application, an additional password is used to perform identity authentication on a user, and the additional password is stored on a client, so that the security of identity authentication of the user is effectively improved, and it is effectively avoided that the user account information is stolen when the password has been stolen.

Based on the embodiment shown in FIG. 5, another embodiment of the present application discloses an identity authentication method. As shown in FIG. 6, the method includes step 600 to step 640.

Step 600: Receive an additional password generation request, where the additional password generation request includes at least a user ID.

A server receives in real time a request sent by a client, where the request includes, but is not limited to, the additional password generation request.

When the client loses the additional password because a terminal device cleans data, or, the additional password locally stored on the client cannot be acquired during a login to another terminal device, a user may use an additional password acquisition portal on a to-be-logged-in client to re-acquire the additional password. For example, when the user enters the user ID by using the additional password acquisition portal on the to-be-logged-in client, and an additional password acquisition button is triggered, the client sends an additional password acquisition request to the server. During specific implementation, the additional password acquisition request includes at least the user ID. If the additional password is generated by the client, a user registration request further includes the additional password. If the additional password is generated by the server, the user registration request may further include a device ID of the client. The device ID may be a device IP address, a device serial number or the like.

The server receives in real time the request sent by the client. After receiving the additional password acquisition request sent by the client, the server first determines whether the user ID carried in the additional password acquisition request has logged in, and generates a corresponding response according to the login of the user ID.

Step 610: Determine whether the user ID has logged in; if the user ID has not logged in, step 620 is performed; and if the user ID has logged in, step 630 is performed.

The server determines the login of the user ID according to stored user information. The server determines whether the user ID has logged in. If the user ID has not logged in, an additional password matching the user ID is sent in a pre-registered information receiving manner of the user ID. If the user ID has logged in, an additional password matching the user ID is sent to the client that sends the additional password generation request.

Step 620: Send an additional password matching the user ID in a pre-registered information receiving manner of the user ID.

When the server determines that the user ID has not logged in, the additional password matching the user ID is sent in the pre-registered information receiving manner of the user ID. Alternatively, authentication is first performed on the user ID via an authentication code, and when the authentication via the authentication code succeeds, the additional password is then sent to the client that sends the additional password acquisition request.

During specific implementation, the user registers an information receiving manner during registration. The information receiving manner includes, but is not limited to, any one of the following: receiving information via an email, receiving information via an SMS message on a mobile phone, receiving information via a phone call, and receiving information via an instant messaging message. The server determines, according to the user ID, a registered information receiving manner of the user ID, for example, receiving information via an email. The stored additional password corresponding to the user ID or a re-generated additional password corresponding to the user ID is then sent in the information receiving manner, so that the user may receive the additional password in the information receiving manner.

Step 630: Send an additional password matching the user ID to a client that sends the additional password generation request.

When the server determines that the user ID has logged in, it is determined that the user is in a scenario in which a logged-in client is used to acquire the additional password for login to another client. Therefore, the server sends the additional password matching the user ID to the client that sends the additional password generation request, that is, the logged-in client, so that the user may use the additional password displayed on the logged-in client to complete input of the additional password into the to-be-logged-in client.

Step 640: Perform identity authentication according to a received identity authentication request.

The identity authentication request includes a to-be-authenticated user ID and password and the additional password.

For a specific implementation of performing identity authentication on a current user of the client according to the identity authentication request sent by the client, refer to the embodiment shown in FIG. 5. Details are not described herein again.

During specific implementation, the additional password may be a character string or a two-dimensional code. When the additional password is sent via a two-dimensional code, the client that performs an identity authentication operation scans the two-dimensional code to enter the additional password.

Optionally, in another embodiment, if it is determined that the user ID has not logged in, authentication via an authentication code is started. If the authentication via the authentication code succeeds, an additional password matching the user ID carried in the additional password generation request is acquired, and the additional password is sent to the client that sends the additional password generation request for the client to store the additional password.

When the user logs in to an account on another terminal device, the client cannot acquire the locally stored additional password. Therefore, the client prompts the user to initiate an additional password acquisition operation, and sends the additional password generation request according to the operation, so that an authentication code is received in the preset information receiving manner to perform authentication via the authentication code to authenticate the user. Next, after the authentication via the authentication code succeeds, the additional password is further acquired. During specific implementation, the additional password generation request includes at least the user ID.

After receiving the additional password generation request, the server acquires, according to the user ID carried in the additional password generation request, an information receiving manner preset by the user corresponding to the user ID, and sends an authentication code in the information receiving manner to authenticate on the user, that is, perform authentication via the authentication code. For example, the authentication code is sent to the user via an SMS message or a phone call or an email, and the user is requested to enter the authentication code on the client to complete the authentication via the authentication code.

For a specific implementation of the authentication via the authentication code, refer to the prior art. Details are not described again in the embodiments of the present application.

If the authentication via the authentication code succeeds, the server acquires an additional password matching the user ID carried in the additional password generation request, and the server locally stores the additional password and at the same time sends the additional password to the client that sends the additional password generation request, making it convenient for the client to store the additional password.

If the additional password is generated by the client, the additional password generation request further includes the additional password. After receiving the additional password generation request, the server directly stores the additional password and a correspondence between the user ID and the additional password. If the additional password is generated by the server, the user registration request may further include a device ID of the client. The server generates the additional password according to the device ID and the user ID. The device ID may be a device IP address, a device serial number or the like.

For a specific method of generating the additional password matching the user ID according to the additional password generation request by the server, refer to the second embodiment. Details are not described herein again.

Based on the identity authentication method disclosed in the embodiment shown in FIG. 5, in the authentication method disclosed in this embodiment, a user may implement normal identity authentication on different terminal devices according to the additional password generation request sent by a client. A law-breaker that steals a password cannot acquire an authentication code in a preset information receiving manner, and therefore cannot pass authentication via the authentication code, cannot acquire the additional password, and cannot pass identity authentication. In this way, it can be effectively avoided that the user account information is stolen when the password has been stolen, thereby protecting the security of the user account information.

The methods provided in the present application are described above. The apparatuses provided in the present application are described below.

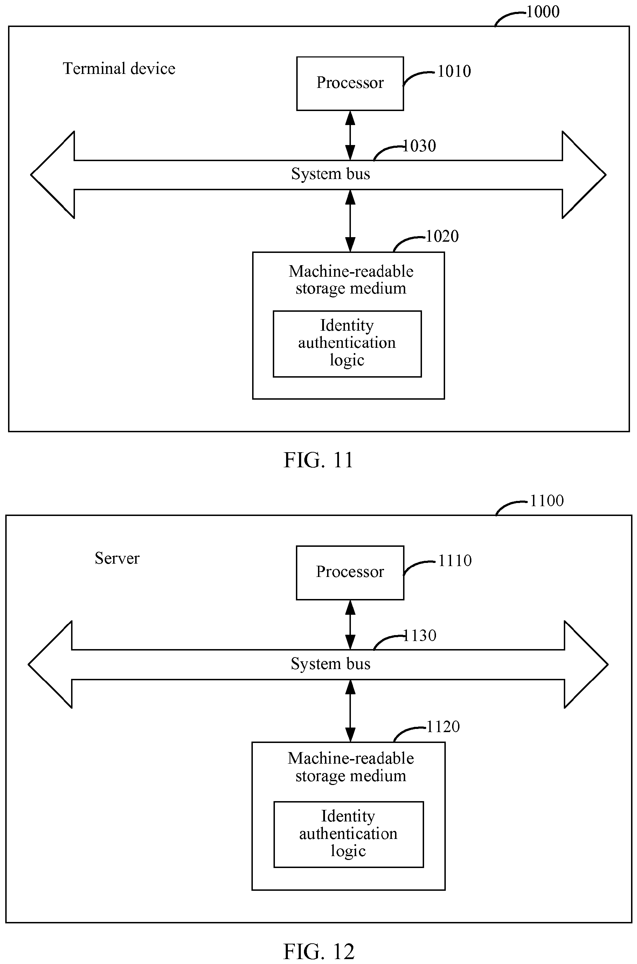

Referring to FIG. 11, FIG. 11 is a structural diagram of hardware of a terminal device according to some embodiments of the present application. The terminal device 1000 may include a processor 1010 and a machine-readable storage medium 1020. The processor 1010 and the machine-readable storage medium 1020 may communicate via a system bus 1030. In addition, by reading and executing machine executable instructions stored in the machine-readable storage medium 1020 correspond to identity authentication logic, the processor 1010 is caused to perform the foregoing identity authentication method.

The machine-readable storage medium 1020 discussed herein may be any electronic, magnetic or optical storage apparatus, among other physical storage apparatuses, and may contain or store information, for example, executable instructions or data. For example, the machine-readable storage medium 1020 may be a random access memory (RAM), a volatile memory, a non-volatile memory, a flash memory, a storage drive (for example, a hard disk drive), a solid-state hard disk, any type of storage disk (for example, an optical disc or a digital versatile disc (DVD)), or a similar storage medium, or a combination thereof.

As shown in FIG. 7, divided by functions, the identity authentication logic in the terminal device may include a first authentication information acquisition module 700, a second authentication information acquisition module 710 and an authentication information sending module 720.

The first authentication information acquisition module 700 is configured to acquire a user ID and a password to be authenticated in response to an identity authentication operation from a user.

The second authentication information acquisition module 710 is configured to acquire an additional password according to the user ID.

The authentication information sending module 720 is configured to send an identity authentication request to a server, where the identity authentication request includes the user ID, the password, and the additional password, so that the server is capable of performing identity authentication in response to the identity authentication request based on a user ID, a password, and an additional password stored on the server.

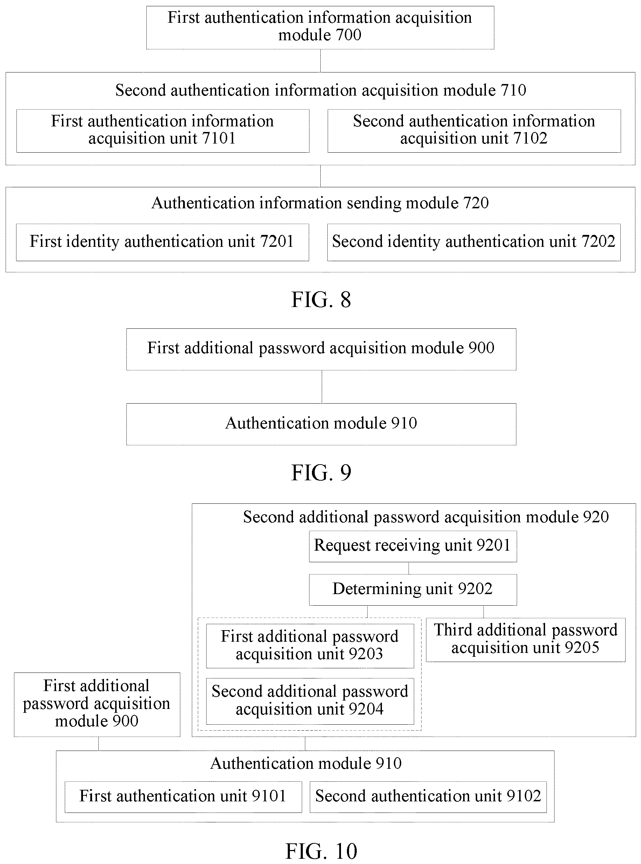

In an example, as shown in FIG. 8, the second authentication information acquisition module 710 further includes a first authentication information acquisition unit 7101.

The first authentication information acquisition unit 7101 is configured to read an additional password that is prestored on the client and matches the user ID.

In an example, the prestored additional password is obtained in the following manner including: acquiring, by the client, a to-be-registered user ID and a password to be registered in response to a registration operation from the user on the client; generating, by the client, the additional password matching the user ID; storing, by the client, the additional password and the user ID in the client in association; and adding, by the client, the user ID, the password, and the additional password to a user registration request, and sending, by the client, the user registration request to the server, so that the server stores the additional password and the user ID in association.

In an example, the prestored additional password is obtained in the following manner including: acquiring, by the client, a user ID and a password to be registered in response to a registration operation from the user on the client; sending, by the client, a user registration request to the server, where the user registration request includes the user ID and the password to be registered; receiving, by the client, an additional password generated by the server in response to the user registration request; and storing, by the client, the additional password and the user ID in the client in association.

In an example, as shown in FIG. 8, the second authentication information acquisition module 710 further includes a second authentication information acquisition unit 7102.

The second authentication information acquisition unit 7102 is configured to: in a case that the client does not store the additional password matching the user ID, send an additional password acquisition request to the server in response to an additional password acquisition operation from the user, where the additional password acquisition request includes the user ID; acquire an additional password entered by the user into the client, where the additional password is acquired by the server via a logged-in client in response to the additional password acquisition request, or the additional password is sent to the user by the server in response to the additional password acquisition request in the pre-registered information receiving manner of the user ID.

In an example, when the additional password is sent via a two-dimensional code, the client scans the two-dimensional code to enter the additional password.

In an example, as shown in FIG. 8, the authentication information sending module 720 further includes any one of a first identity authentication unit 7201 and a second identity authentication unit 7202.

The first identity authentication unit 7201 is configured to perform encryption on the password by using the additional password, to obtain an encrypted password; add the encrypted password and the user ID into the identity authentication request; and send the identity authentication request to the server.

The second identity authentication unit 7202 is configured to add the user ID, the password, and the additional password into the identity authentication request; and send the identity authentication request to the server.

In the terminal device disclosed in this embodiment of the present application, a client on the terminal device acquires a to-be-authenticated user ID and password in response to an identity authentication operation from a user; the client acquires an additional password according to the user ID; and the client sends an identity authentication request to a server, where the identity authentication request includes the user ID, the password, and the additional password, so that the server is capable of performing identity authentication in response to the identity authentication request based on a user ID, a password, and an additional password stored on the server. An additional password is used to perform identity authentication on a user, the security of identity authentication of the user is effectively improved, and it is effectively avoided that the user account information is stolen when the password has been stolen. After a password of a user is stolen, a stealer performs identity authentication on another client. Because an additional password cannot be acquired, even if a username and a password are stolen, identity authentication cannot be completed, so that a stealer cannot successfully log in to a user account to acquire account information of the user.

The client stores the additional password in advance, and then sends the to-be-authenticated user ID and password and the additional password to the server for identity authentication. After a password of a user is stolen, a stealer performs identity authentication on another client. Because an additional password cannot be acquired, even if a username and password are stolen, identity authentication cannot be completed, so that a stealer cannot successfully log in to a user account to acquire account information of the user, thereby further improving authentication security.

By acquiring and displaying the additional password by a logged-in client, or by acquiring the additional password in the pre-registered information receiving manner, it can be ensured that a user normally logs in to different clients. In addition, the additional password is sent in the form of a two-dimensional code, and a to-be-logged-in client can scan the two-dimensional code to enter the additional password, so that the user can rapidly, conveniently, and accurately enter the additional password, thereby improving authentication efficiency.

Referring to FIG. 12, FIG. 12 is a structural diagram of hardware of a server according to some embodiments of the present application. The server 1100 may include a processor 1110 and a machine-readable storage medium 1120. The processor 1110 and the machine-readable storage medium 1120 may communicate via a system bus 1130. In addition, by reading and executing machine executable instructions stored in the machine-readable storage medium 1120 correspond to identity authentication logic, the processor 1110 is caused to perform the foregoing identity authentication method.

The machine-readable storage medium 1120 discussed herein may be any electronic, magnetic or optical storage apparatus, among other physical storage apparatuses, and may contain or store information, for example, executable instructions or data. For example, the machine-readable storage medium 1120 may be a RAM, a volatile memory, a non-volatile memory, a flash memory, a storage drive (for example, a hard disk drive), a solid-state hard disk, any type of storage disk (for example, an optical disc or a DVD), or a similar storage medium, or a combination thereof.

As shown in FIG. 9, divided by functions, the identity authentication logic in the server may include a first additional password acquisition module 900 and an authentication module 910.

The first additional password acquisition module 900 is configured to acquire an additional password matching a user ID carried in a received user registration request according to the user registration request; and store the additional password and the user ID in association.

The authentication module 910 is configured to perform identity authentication according to a received identity authentication request, where the identity authentication request includes a user ID and a password to-be-authenticated, and an additional password that is stored on a client and is associated with the user ID.

In an example, as shown in FIG. 10, the logic further includes: a second additional password acquisition module 920. The second additional password acquisition module 920 further includes: a request receiving unit 9201, a determining unit 9202, a first additional password acquisition unit 9203 or a second additional password acquisition unit 9204, and a third additional password acquisition unit 9205.

The request receiving unit 9201 is configured to receive an additional password acquisition request, where the additional password acquisition request includes at least the user ID.

The determining unit 9202 is configured to determine whether the user ID has logged in.

The first additional password acquisition unit 9203 is configured to: if the user ID has not logged in, send the additional password matching the user ID in a pre-registered information receiving manner of the user ID.

The second additional password acquisition unit 9204 is configured to: if authentication via an authentication code succeeds, acquire an additional password matching the user ID carried in the additional password acquisition request.

The third additional password acquisition unit 9205 is configured to: if the user ID has logged in, send the additional password matching the user ID to the client that sends the additional password acquisition request.

In an example, as shown in FIG. 10, the authentication module 910 includes any one of a first authentication unit 9101 and a second authentication unit 9102.

The first authentication unit 9101 is configured to: acquire, by using the user ID in the identity authentication request, the additional password and a registration password that are stored on the server and match the user ID, where the additional password and the registration password are used to decrypt an encrypted to-be-authenticated password in the identity authentication request; and match a decrypted to-be-authenticated password against the registration password, to perform identity authentication.

The second authentication unit 9102 is configured to acquire, according to the user ID in the identity authentication request, the additional password and the registration password that are stored on the server and match the user ID, where the additional password and the registration password are respectively matched against the additional password and the to-be-authenticated password that are included in the identity authentication request to perform identity authentication.

In the server disclosed in this embodiment of the present application, a server acquires an additional password matching a user ID carried in a received user registration request according to the user registration request; the server stores the additional password and the user ID in association; and the server performs identity authentication according to a received identity authentication request, where the identity authentication request includes a user ID and a password to be authenticated, and an additional password that is stored on a client and is associated with the user ID. The server disclosed in this embodiment of the present application uses an additional password to perform identity authentication on a user, and stores the additional password on a client, so that the security of identity authentication of the user is effectively improved, and it can be effectively avoided that the user account information is stolen when the password has been stolen.

Further, an additional password is generated according to an additional password generation request sent by the client, so that a user may implement normal identity authentication on different devices. A law-breaker that steals a password cannot acquire an authentication code in a preset information receiving manner, and therefore cannot pass authentication via an authentication code, cannot acquire the additional password, and cannot pass identity authentication. In this way, it can be effectively avoided that the user account information is stolen when the password has been stolen, thereby protecting the security of the user account information.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, that is, one or more modules of computer program instructions encoded on a tangible non-transitory program carrier for execution, by, or to control the operation of, a data processing apparatus. Alternatively or in addition, the program instructions can be encoded on a propagated signal that is an artificially generated signal, for example, a machine-generated electrical, optical, or electromagnetic signal that is generated to encode information for transmission to suitable receiver apparatus for execution by the data processing apparatus. The computer storage medium may be a machine-readable storage device, a machine-readable storage substrate, a random or serial access memory device, or a combination of one or more of them.

The processing and logic procedures described in this specification may be performed by one or more programmable computers executing one or more computer programs, to perform corresponding functions by operating according to input data and generating output. The processing and logics procedures may also be performed by, and the apparatus may also be implemented as, special-purpose logic circuitry, for example, a field programmable gate array (FPGA) or an application-specific integrated circuit (ASIC).

Computers suitable for the execution of a computer program include, by way of example, general-and/or special-purpose microprocessors, or any other type of central processing unit. Generally, the central processing unit will receive instructions and data from a read-only memory (ROM) and/or a RAM. The essential elements of a computer are a central processing unit for performing or executing instructions and one or more memory devices for storing instructions and data. Generally, a computer will also include one or more mass storage devices for storing data, for example, magnetic, magneto-optical discs, or optical discs. And/or the computer may be operatively coupled to the mass storage devices to receive information from the mass storage devices or transfer information to the mass storage devices. However, a computer does not necessarily have such devices. Moreover, a computer may be embedded in another device, for example, a mobile phone, a personal digital assistant (PDA), a mobile audio or video player, a game console, a Global Positioning System (GPS) receiver, or a portable storage device (for example, a universal serial bus (USB) flash memory drive), to name just a few.

Computer readable media suitable for storing computer program instructions and data include all forms of non-volatile memories, media and memory devices, including by way of example semiconductor memory devices (for example, erasable programmable read-only memory (EPROM), electrically-erasable programmable read-only memory (EEPROM), and flash memory devices), magnetic disks (for example, internal hard disks or removable disks), magneto-optical discs, and compact disc (CD)-ROM and DVD-ROM disks. The process and the memory may be supplemented by, or incorporated with, special-purpose logic circuitry.

While this specification contains many specific implementation details, these should not be construed as limitations on the scope of any of the present disclosure or the scope of what may be claimed, but rather as descriptions of features that may be specific to particular embodiments of the present disclosure. Certain features that are described in this specification in the context of separate embodiments can also be implemented in combination in a single embodiment. Conversely, various features that are described in the context of a single embodiment can also be implemented in a plurality of embodiments separately or in any suitable subcombination. Moreover, although features may be described above as acting in certain combinations and even initially claimed as such, one or more features from a claimed combination can in certain cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules in the embodiments described above should not be understood as requiring such separation in all embodiments, and it should be understood that the described program components and systems can generally be integrated together in a single software product or packaged into a plurality of software products.

Particular embodiments of the subject matter have thus been described. Other embodiments are within the scope of the following claims. For example, the actions recited in the claims can be performed in a different order and still achieve desirable results. In addition, the processing depicted in the accompanying figures does not necessarily require the particular order shown, or sequential order, to achieve desirable results. In certain implementations, multitasking and parallel processing may be advantageous.

It should be noted that the relational terms herein such as first and second are used only to differentiate an entity or operation from another entity or operation, and do not require or imply any actual relationship or sequence between these entities or operations. Moreover, the terms "include", "comprise", and any variants thereof are intended to cover a non-exclusive inclusion. Therefore, in the context of a process, method, object, or apparatus that includes a series of elements, the process, method, object, or device not only includes such elements, but also includes other elements not specified expressly, or may include inherent elements of the process, method, object, or device. Unless otherwise specified, an element limited by "include a/an..." does not exclude other same elements existing in the process, the method, the article, or the apparatus that includes the element.

The method and apparatus of the present disclosure are described in detail above. The principle and implementation of the present disclosure are described herein through specific examples. The description about the embodiments of the present disclosure is merely provided for ease of understanding of the method and core ideas of the present disclosure. Persons of ordinary skill in the art can make variations and modifications to the present disclosure in terms of the specific implementations and application scopes according to the ideas of the present disclosure. Therefore, the specification shall not be construed as a limit to the present disclosure.

## Claims

1. An identity authentication method, comprising:
acquiring, by a client on a terminal device, a user identifier (ID) and a password to be authenticated in response to an identity authentication operation from a user;
acquiring, by the client, an additional password according to the user ID; and
sending, by the client, an identity authentication request to a server, wherein the identity authentication request comprises the user ID, the password, and the additional password, so that the server is capable of performing identity authentication in response to the identity authentication request based on a user ID, a password, and an additional password stored on the server.

2. The method according to claim 1, wherein acquiring the additional password comprises:
reading, by the client, the additional password that is prestored on the client and matches the user ID.

3. The method according to claim 2, wherein the prestored additional password is obtained in the following manner comprising:
acquiring, by the client, a user ID and a password to be registered in response to a registration operation from the user on the client;
generating, by the client, the additional password matching the user ID;
storing, by the client, the additional password and the user ID in the client in association;
adding, by the client, the user ID, the password, and the additional password to a user registration request; and
sending, by the client, the user registration request to the server, so that the server stores the additional password and the user ID in association.

4. The method according to claim 2, wherein the prestored additional password is obtained in the following manner comprising:
acquiring, by the client, a user ID and a password to be registered in response to a registration operation from the user on the client;
sending, by the client, a user registration request to the server, wherein the user registration request comprises the user ID and the password to be registered;
receiving, by the client, an additional password generated by the server in response to the user registration request; and
storing, by the client, the additional password and the user ID in the client in association.

5. The method according to claim 2, wherein acquiring an additional password further comprises:
in a case that the client does not store the additional password matching the user ID, sending, by the client, an additional password acquisition request to the server in response to an additional password acquisition operation from the user, wherein the additional password acquisition request comprises the user ID;
acquiring, by the client, an additional password entered by the user into the client, wherein the additional password is acquired by the server via a logged-in client in response to the additional password acquisition request, or the additional password is sent to the user by the server in response to the additional password acquisition request in the pre-registered information receiving manner of the user ID.

6. The method according to claim 4, wherein when the additional password is sent via a two-dimensional code, the client scans the two-dimensional code to enter the additional password.

7. The method according to any one of claims 1 to 6, wherein sending the identity authentication request to the server comprises:
performing, by the client, encryption on the password by using the additional password, to obtain an encrypted password;
adding, by the client, the encrypted password and the user ID into the identity authentication request; and
sending, by the client, the identity authentication request to the server.

8. The method according to any one of claims 1 to 6, wherein sending the identity authentication request to the server comprises:
adding, by the client, the user ID, the password, and the additional password into the identity authentication request; and
sending, by the client, the identity authentication request to the server.

9. An identity authentication method, comprising:
acquiring, by a server, an additional password matching a user identifier (ID) carried in a received user registration request according to the user registration request;
storing, by the server, the additional password and the user ID in association; and
performing, by the server, identity authentication according to a received identity authentication request, wherein the identity authentication request comprises a user ID and a password to be authenticated, and an additional password that is stored on a client and is associated with the user ID.

10. The method according to claim 9, further comprising:
receiving, by the server, an additional password acquisition request, wherein the additional password acquisition request comprises at least the user ID;
determining, by the server, whether the user ID has logged in;
if the user ID has not logged in, sending, by the server, the additional password matching the user ID in a pre-registered information receiving manner of the user ID; and
if the user ID has logged in, sending, by the server, the additional password matching the user ID to the client that sends the additional password acquisition request.

11. The method according to claim 10, further comprising:
if the user ID has not logged in, starting, by the server, authentication via an authentication code; and
if the authentication via the authentication code succeeds,
acquiring, by the server, the additional password matching the user ID carried in the additional password acquisition request, and
sending, by the server, the additional password to the client that sends the additional password acquisition request for the client to store the additional password.

12. A terminal device, comprising:
a processor; and
a machine-readable storage medium,
wherein the machine-readable storage medium stores machine executable instructions that is capable of being executed by the processor, and the machine executable instructions cause the processor to perform the following steps comprising:
acquiring a user identifier (ID) and a password to be authenticated in response to an identity authentication operation from a user;
acquiring an additional password according to the user ID; and
sending an identity authentication request to a server, wherein the identity authentication request comprises the user ID, the password, and the additional password, so that the server is capable of performing identity authentication in response to the identity authentication request based on a user ID, a password, and an additional password stored on the server.

13. A server, comprising:
a processor; and
a machine-readable storage medium;
wherein the machine-readable storage medium stores machine executable instructions that is capable of being executed by the processor, and the machine executable instructions cause the processor to perform the identity authentication method according to any one of claims 9 to 11.

14. A machine-readable storage medium, storing machine executable instructions, wherein when being invoked and executed by a processor, the machine executable instructions cause the processor to perform the identity authentication method according to any one of claims 1 to 8.

15. A machine-readable storage medium, storing machine executable instructions, wherein when being invoked and executed by a processor, the machine executable instructions cause the processor to perform the identity authentication method according to any one of claims 9 to 11.
